Europäisches Patentamt

European Patent Office

Office européen des brevets

(19)

(11) Publication number: 0 203 672

A2

## (12) EUROPEAN PATENT APPLICATION

(21) Application number: 86200949.5

(22) Date of filing: 30.05.86

(51) Int. Cl.4: **F16L 37/00** , F16L 39/00

(30) Priority: 31.05.85 US 739906
09.12.85 US 806476

(43) Date of publication of application:
03.12.86 Bulletin 86/49

(84) Designated Contracting States:
BE DE FR GB LU NL

(71) Applicant: **DIJKA STEENWIJK B.V.**
**Produktieweg 7**
**NL-8331 LJ Steenwijk(NL)**

(72) Inventor: **Boltong, Willem G.**
**6237 Governor M Donald Drive**
**MACON, Georgia 31206(US)**
Inventor: **Oosterhof, Gerard**
**28 Prins Bernardstraat**
**NL-8381 EJ Steenwijk(NL)**
Inventor: **Ringnalda, Wim**
**30 Mr. Z. ten Steghestraat**
**NL-8331 KG Steenwijk(NL)**

(74) Representative: **Kooy, Leendert Willem**
**OCTROOIBUREAU VRIESENDORP & GAADE**
**P.O. Box 266**
**NL-2501 AW The Hagué(NL)**

(54) Multi conduit sealing assembly providing an air-tight, leak-resistant seal between coupled conduits.

(57) A DEVICE FOR COUPLING AND PROVIDING AN AIR-TIGHT AND LEAK-RESISTANT SEAL BETWEEN ADJOINING MULTIPLE PAIRS OF CONDUITS, COMPRISING: A FIRST BRACE HAVING A MULTIPLICITY OF HOLES CORRESPONDING TO THE OUTER DIMENSIONS OF THE CONDUITS FOR SUPPORTING HALF OF THE MULTIPLE PAIRS OF CONDUITS; A SECOND BRACE HAVING A MULTIPLICITY OF HOLES CORRESPONDING TO THE OUTER DIMENSIONS OF THE CONDUITS FOR SUPPORTING THE OTHER HALF OF THE MULTIPLE PAIRS OF CONDUITS; A GASKET HAVING A MULTIPLICITY OF HOLES FOR CONTACTING A PORTION OF THE OUTER SURFACES OF THE MULTIPLE PAIRS OF CONDUITS AND THEREBY PROVIDING AN AIR-TIGHT AND LEAK-RESISTANT SEAL THEREBETWEEN; AND MEANS FOR SECURING SAID FIRST AND SAID SECOND BRACE TO SAID GASKET MEANS

FIG. I

Rank Xerox

# MULTI CONDUIT SEALING ASSEMBLY PROVIDING AN AIR-TIGHT, LEAK-RESISTANT SEAL BETWEEN COUPLED CONDUITS.

THIS INVENTION RELATES TO THE COUPLING OF CONDUITS, AND MORE PARTICULAR TO A SEALING ASSEMBLY FOR COUPLING PAIRS OF CONDUITS SO AS TO PROVIDE AN AIR-TIGHT, LEAK-RESISTANT SEAL BETWEEN THE PAIRS OF CONDÚITS.

FURTHERMORE, THE SEALING ASSEMBLY AND COUPLED PAIRS OF CONDUITS CAN BE CONTAINED IN AN EXTERNAL HOUSING TO PROTECT THE ASSEMBLY AND CONDUITS. SECTIONS OF EXTERNAL HOUSING ARE COUPLED TO ALSO PROVIDE AN AIR-TIGHT, LEAK-RESISTANT SEAL. ADDITIONALLY, A SUPPORT SPACER IS PROVIDED FOR SUPPORTING THE PAIRS OF CONDUITS AT SELECTED LOCATIONS WIHTIN THE HOUSING.

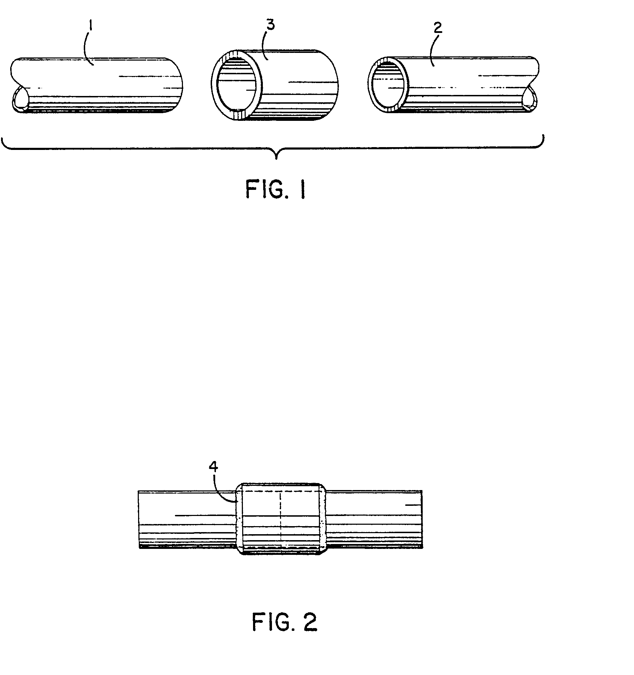

MANY METHODS FOR JOINING A PAIR OF CONDUITS IN AN AIR-TIGHT FASHION ARE KNOWN IN THE ART. FOR EXAMPLE, AS SHOWN IN FIGURES 1 AND 2, CONDUITS 1 AND 2 ARE BROUGHT TOGETHER IN SLEEVE 3 AND SEALED USING STANDARD SEALING COMPOUND 4 (FIG.2). THE SEALING COMPOUND IS USUALLY A RUBBER OR SILICON BASED COMPOUND WHICH RESIST WATER PENETRATION. ALTHOUGH PROVIDING AN AIR-TIGHT SEAL, THE APPLICATION OF THE COMPOUND MUST BE CONTIGUOUS ABOUT THE PERIMETERS OF THE SLEEVE; ANY GAPS WILL DESTROY THE INTEGRITY OF THE SEAL. IN CLOSE WORK ENVIRONMENTS, IT MAY BE VERY DIFFICULT TO GET ACCESS TO THE ENTIRE SLEEVE'S PERIMETER, THEREBY MAKING IT DIFFICULT TO PROPERLY APPLY THE COMPOUND. THE COMPOUND'S APPLICATION IS ALSO TIME-CONSUMING, IN ADDITION TO THE TIME REQUIRED FOR DRYING, THUS ADDING TO THE COST OF ASSEMBLY. FURTHERMORE, THE COMPOUND IS USUALLY PERMANENT-DRYING, THEREBY MAKING IT IMPRACTICAL TO GAIN ACCESS TO THE CONDUITS AT THAT POINT.

ANOTHER METHOD FOR JOINING A PAIR OF CONDUITS IS BY USING A THREADED SLEEVE. THIS METHOD, HOWEVER, REQUIRES THAT THE ENDS OF THE JOINING CONDUITS ALSO BE THREADED. THIS REQUIREMENT ADDS COST AND COMPLEXITY DUE TO THE SEPARATE THREAD MACHINING STEP AND THE FACT THAT THE CONDUIT WALL DIAMETER WOULD HAVE TO BE THICKER TO PROVIDE A BASE FOR THE THREADS. THIS METHOD IS ALSO HIGLY IMPRACTIVAL WHEN USING STANDARD PLASTIC OR PVC CONDUITS, DUE TO THE INHERENT LOW SHEAR STRENGTH. ALSO, SHOULD THE SLEEVE BE OVER-TIGHTENED, FRACTURES DUE TO STRESS MAY RESULT, DESTROYING THE INTEGRITY OF THE SEAL. ADDITIONALLY, THE THREADED SLEEVE ASSEMBLY DOES NOT PROVIDE AN AIR-TIGHT SEAL. THUS, A SEALING COMPOUND WOULD HAVE TO BE EMPLOYED, WITH ALL THE NEGATIVE ATTRIBUTES DISCUSSED ABOVE.

IT IS ALSO KNOWN TO JOIN A PAIR OF CONDUITS USING A MALE/FEMALE (NON-THREADED) CONDUIT ARRANGEMENT, AS SHOWN IN US PATENT NO. 3,872,894 ISSUED TO STREIT, INCORPORATED HEREIN BY REFERENCE. STREIT SHOWS MULTIPLE INTERNAL CONDUITS HOUSED IN AN EXTERIOR HOUSING. THE EXTERIOR HOUSING HAS BOTH A FEMALE END, FLARED OUTWARDLY TO PROVIDE A BELL, AND A MALE END, TAPERED TO FIT INTO AN ADJOINING CONDUIT'S FEMALE END. A RIBBED SEALING GASKET IS PROVIDED ON THE MALE END TO AID THE SEAL'S INTEGRITY. HOUSING SECTIONS ARE FURTHER SECURED TOGETHER BY SPRING CLIPS, PLACED ABOUT THE PERIPHERY OF THE MALE/FEMALE CONNECTION, WHICH ARE APPLIED EITHER BY HAND PRESSURE OF BY HAMMERING THEM INTO PLACE. THIS METHOD, ALTHOUGH PROVIDING AN AIR-TIGHT, LEAK-RESISTANT SEAL; IS VERY COSTLY FOR MANY REASONS: THE EXTERIOR HOUSING REQUIRES MORE CONDUIT MATERIAL FOR THE FEMALE END; THE HOUSING IS NOT STANDARD; LABOR COSTS FOR THE APPLICATION OF THE SPRING CLIPS;AND THE COST OF SPRING CLIPS THEMSELVES. ADDITIONALLY, APPLICATION OF THE SPRING CLIPS, IF TOO ROUGH, MAY DAMAGE THE PLASTIC OR POLYETHYLENE HOUSING. CONVERSELY, IF NOT ENOUGH PRESSURE IS APPLIED, THE SPRING CLIPS MAY POP OFF. THUS, THE SPRING CLIPS MAY NOT BE VERY PRACTICAL.

ANOTHER METHOD FOR JOINING PAIRS OF CONDUITS IS BY FITTING MALE TERMINALS OVER THE ENDS OF STANDARD CONDUITS AND JOINING THE TERMINALS IN A FEMALE UNION. SUCH A METHOD, FOR USE IN A BEVERAGE DISPENSING SYSTEM, IS SHOWN IN US PATENT NO. 3,590,855 ISSUED TO WOOLLEN, INCORPORATED HEREIN BY REFERENCE. THE TERMINALS HAVE A FLANGE WITH AN O-RING SEATED ABOUT THE PERIPHERY OF A PORTION OF THE FLANGE. THE O-RING CREATES AN AIR-TICHT, LEAK-RESISTANT SEAL BETWEEN THE FLANGE AND THE FEMALE UNION USED TO JOIN THE CONDUITS VIA THE TERMINALS. THIS ARRANGEMENT ALLOWS SIMPLE DISCONNECT AND RECONNECT WITHOUT THE NEED FOR O-RING REPLACEMENT, FOR THE WEAR AND TEAR ON THE O-RINGS ARE SLIGHT. THIS METHOD, HOWEVER, REDUCES THE USABLE INTERNAL DIAMETER OF THE CONDUITS SINCE THE TERMINALS ALSO ATTACH TO THE CONDUIT'S INTERIOR. IF FULL INTERNAL DIAMETER UTILIZATION IS IMPERATIVE, THIS METHOD IS HIGHLY UNSATISFACTORY. ADDITIONALLY, THE COST OF THESE SPECIAL TERMINALS WILL ADD CONSIDERABLE COST TO A SYSTEM HAVING MANY SECTIONS OF CONDUIT WHICH NEED TO BE JOINED.

THE ABOVE METHODS HAVE SERIOUS DRAWBACKS: INCREASED COST OVER STANDARD CONDUITS; EXPENSIVE SEALING DUE TO LABOR INTENSIVE JOINING METHODS; QUESTIONABLE SEALING INTEGRITY DUE EITHER TO IMPROPER APPLICATION OF A SEALING COMPOUND OR TO POSSIBLE CONDUIT FRACTURES FROM OVER-STRESSED SEALING ASSEMBLIES; AND REDUCTION OF THE USABLE INTERNAL DIAMETER OF THE CONDUITS. ADDI-TIONALLY, WHEN USING NON-STANDARD CONDUITS, THE ABILITY TO SHORTEN A CONDUIT IS IMPEDED, SINCE CUTTING OFF ANY UNWANTED CONDUIT LENGTH WOULD ALSO CUT OFF AN ESSENTIAL SEALING MEMBER, SUCH AS THREADS OR A PORTION OF THE MALE/FEMALE CONNECTION MEANS.

IT IS AN OBJECT OF THE PRESENT INVENTION TO PROVIDE A SEALING ASSEMBLY WHICH PROVIDES AN AIR-TIGHT, LEAK-RESISTANT SEAL BETWEEN STANDARD CONDUIT PAIRS BEING JOINED.

IT IS ALSO AN OBJECT OF THE PRESENT INVENTION TO PROVIDE A SEALING ASSEMBLY WHICH DOES NOT EXERT PRESSURE ON THE CONDUIT PAIRS BEING JOINED.

IT IS FURTHER AN OBJECT OF THE PRESENT INVENTION TO PROVIDE A SEALING ASSEMBLY WHICH QUICKLY JOINS CONDUIT PAIRS AND WHICH REQUIRES MINIMUM LABOR FOR JOINTURE.

IT IS ADDITIONALLY AN OBJECT OF THE PRESENT INVENTION TO PROVIDE A SEALING ASSEMBLY WHICH PROVIDES AN AIR-TIGHT, LEAK-RESISTANT SEAL BETWEEN STANDARD MULIT-CONDUIT PAIRS BEING JOINED, AND TO DO SO ECONOMICALLY, QUICKLY, AND WITHOUT EXERTING PRESSURE ON THE MULTI-CONDUIT PAIRS BEING JOINED.

THE PRESENT INVENTION IS DIRECTED TO A SEALING ASSEMBLY WHICH PROVIDES AN AIR-TIGHT, LEAK-RESISTANT SEAL BETWEEN MULTIPLE PAIRS OF CONDUITS. THIS SEALING ASSEMBLY CAN BE USED IN FIBER OPTIC CA-BLE INSTALLATIONS AND OTHER APPLICA-TIONS WHERE THE INTEGRITY OF THE SEAL BETWEEN CONDUIT PAIRS IS IMPERATIVE.

IN ONE EMBODIMENT, THE SEALING ASSEMBLY COMPRISES A PAIR OF BRACES EACH HAVING SYMMETRICALLY LOCATED HOLES CORRESPONDING TO THE SIZE OF THE OUTER DIAMETER OF THE CONDUITS. EACH BRACE HOLDS THE TAIL END OF TE CONDUITS TO BE JOINED. THE THICKNESS OF THE BRACE ALONE SUPPORTS THE TAIL END; NO PRESSURE IS EXERTED ON THE TAIL END BY THE BRACE. PLACED BETWEEN THE PAIR OF BRACES IS A GASKET MEANS WHICH ALSO HAS HOLES SYMMETRICALLY LOCATED WITH RESPECT TO THE HOLES PLACED IN THE BRACES. THE GASKET'S HOLES, HOWEVER, CORRESPOND TO THE THE SIZE OF THE INNER DIAMETER OF THE CONDUITS.

IN THIS WAY, THE GASKET ACTS NOT ONLY AS A SEAL BETWEEN BRACES, BUT ALSO AS A SEAL BETWEEN THE TERMINAL ENDS OF THE ADJOINING CONDUITS. THE ENTIRE SEALING ASSEMBLY IS SECURED BY AN INTEGRAL LATCHING ARRANGEMENT, BUT MAY BE SECURED BY ANY NUMBER OF OTHER WAYS, SUCH AS A BOLT/WINGNUT ARRANGEMENT OR GLUEING COMPOUND.

IN ANOTHER EMBODIMENT, CONDUITS ARE JOINED BY INSERTING ONE CONDUIT THROUGH A FIRST BRACE, PAST A GASKET MEANS AND INTO A SECOND BRACE WHERE IT COMES TO A STOP ON ONE SIDE OF A STOP-RING LOCATED IN AN ATTACHED SECOND BRACE. INSERTION OF THIS CONDUIT CAUSES THE GASKET MEANS TO BEND INTO THE SECOND BRACE, AND THE SECOND BRACE IS THEREFOR PROVIDED WITH A RACEWAY FOR HOUSING THE PORTION OF THE GASKET MEANS WHICH IS BENT IN THIS WAY. THE ADJOINING CONDUIT IS INSERTED FROM THE SECOND BRACE WHERE IT COMES TO A STOP ON THE OTHER SIDE OF THE STOP-RING. THE GASKET MEANS EXERTS PRESSURE ON THE CONDUIT, · THEREFORE PROVIDING AN AIR-TIGHT AND LEAK-RESISTANT SEAL ABOUT THE PERIPHERY OF THE CONDUIT. ADDITIONALLY, THE CONDUITS ARE OPTIONALLY SOLVENT-WELDED TO THE SEALING ASSEMBLY TO INCREASE SEALING INTEGRITY AND INSURE PERMANENT PLACEMENT OF THE CONDUITS IN THE SEALING ASSEMBLY.

THE ABOVE SEALING ASSEMBLIES PROVIDE AN AIR-TIGHT AND LEAK-RESISTANT SEAL, ALLOWING THE CONDUITS TO BE PLACED UNDERWATER, SUBSURFACE, OR ABOVE-GROUND ENVIRONMENTS WHILE PREVENTING LEAKAGE OF INTERNAL PRESSURE OR INFILTRATION OF FLUID INTO THE PAIRS OF THE CONDUITS. THIS AIR-TIGHT SEAL HAS BEEN FOUND TO BE VERY EFFECTIVE IN ALLOWING PLUGS TO BE BLOWN TRHOUGH LARGE NUMBERS OF ADJOINING CONDUITS WITHOUT LOSS OF THE MOTIVE FORCE, THUS ALLOWING FOR MORE EFFICIENT THREADING OF THE FIBER OPTIC CABLE THROUGH THE LARGE NUMBER OF ADJOINING CONDUITS.

TO PROTECT THE CONDUITS AND SEALING ASSEMBLY, AN OPTIONAL EXTERNAL HOUSING CAN BE EMPLOYED. THE SEALING ASSEMBLY AND CONDUITS ARE PLACED INSIDE AN EXTERNAL HOUSING, ALONG WITH SUPPORT SPACERS.

THE SUPPORT SPACERS ARE PROVIDED WITH HOLES CORRESPONDING TO THE SIZE OF THE OUTER DIAMETER OF THE CONDUIT, AND THE SPACERS BOTH SUPPORT THE CONDUITS AND INSURE THEIR SYMMETRICAL PLACEMENT WITHIN THE HOUSING. THE SUPPORT SPACERS ARE PLACED AT INTERVALS IN THE HOUSING DEPENDING ON THE CONDUITS' LOAD. SECTIONS OF THE EXTERNAL HOUSING ARE CONNECTED BY A CONVENTIONAL SEALING MEANS, SUCH AS A RUBBER OR THERMOPLASTIC RIBBED SEAL AND SLEEVE ASSEMBLY. THE EXTERNAL HOUSING'S SEALING MEANS ALSO PROVIDES AN AIR-TIGHT AND LEAK-RESISTANT SEAL, FURTHER INSULATING THE MULTIPLE PAIRS OF CONDUITS AND SEALING ASSEMBLY.

FIGURE 1 IS AN OBLIQUE VIEW OF A PRIOR ART DEVICE FOR JOINING CONDUITS.

FIGURE 2 IS A FRONT VIEW OF THE DEVICE SHOWN IN FIGURE 1.

FIGURE 3 IS AN EXPLODED ISOMETRIC PROJECTION OF ONE EMBODIMENT OF THE SEALING ASSEMBLY OF THE PRESENT INVENTION.

FIGURE 4 IS A FRONTAL CUT-AWAY VIEW SHOWING THE MEANS FOR SECURING THE SEALING ASSEMBLY OF FIGURE 3.

FIGURE 5 IS A FRONTAL CUT-AWAY VIEW SHOWING THE SEALING ASSEMBLY IN ITS SECURED POSITION.

FIGURE 6 IS AN EXPLODED ISOMETRIC PROJECTION OF ANOTHER EMBODIMENT OF THE SEALING ASSEMBLY OF THE PRESENT INVENTION.

FIGURE 7 IS A FRONTAL CUT-AWAY VIEW SHOWING THE SEALING ASSEMBLY OF FIGURE 3 ENCLOSED IN AN EXTERNAL HOUSING.

FIGURE 8 IS AN OBLIQUE VIEW OF THE CONDUIT SUPPORT SPACER OF THE PRESENT INVENTION.

FIGURE 9 IS A FRONTAL CUT-AWAY VIEW SHOWING THE EMBODIMENT OF THE SEALING ASSEMBLY OF FIGURE 3 ENCLOSED IN A SLEEVE FOR JOINING SECTIONS OF EXTERNAL HOUSING.

FIGURE 10 IS AN ISOMETRIC VIEW OF ANOTHER EMBODIMENT OF THE SEALING ASSEMBLY OF THE PRESENT INVENTION.

FIGURE 11 IS A CUT-AWAY VIEW FROM LINES A-A OF THE SEALING ASSEMBLY SHOWN IN FIGURE 10.

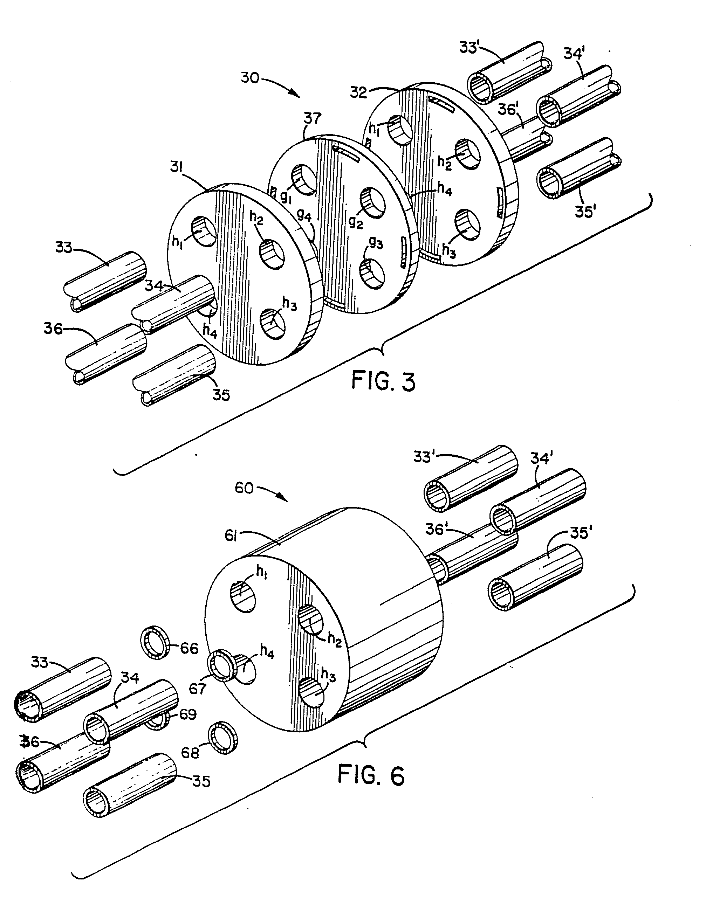

TURNING NOW TO FIGURE 3, THE PREFERRED EMBODIMENT OF THE SEALING ASSEMBLY OF THE PRESENT INVENTION WILL NOW BE DISCUSSED. THE SEALING ASSEMBLY 30 IS SHOWN IN EXPLODED ISOMETRIC PROJECTION AND INCLUDES A PAIR OF BRACES 31 AND 32. EACH BRACE HAS A MULTIPLICITY OF HOLES $H_1$ THROUGH $H_4$ WHICH ARE PREFER-ABLY SYMMETRICALLY LOCATED ABOUT EACH BRACE IN A CONCENTRIC FASHION. THE HOLES $H_1$ THROUGH $H_4$ CORRESPOND TO THE OUTER DIAMETER DIMENSIONS OF CONDUITS 33 (33') THROUGH 36 (36'), RESPECTIVELY. CONDUIT PAIRS 33, 33' NEED NOT BE IDENTICAL TO ANY OTHER CONDUIT PAIR, AND IT IS TO BE UNDERSTOOD THAT THIS INVENTION IS NOT SO LIMITED. ALL THAT IS REQUIRED IS THAT INDIVIDUAL CONDUIT PAIRS HAVE THE SAME INNER DIAMETERS. IN THE PREFERRED EMBODIMENT, HOWEVER, CONDUITS 33 (33') THROUGH 36 (36') ARE IDENTICAL. BRACES 31 AND 32 CAN BE MADE OF RUBBER, THERMOPLASTIC, NYLON, OR THE LIKE, AND IN THE PREFERRED EMBODIMENT BRACES 31 AND 32 ARE MADE OF NYLON.

PLACED BETWEEN BRACES 31 AND 32 IS GASKET MEANS 37 HAVING A MULTIPLICITY OF HOLES $G_1$ THROUGH $G_4$ WHICH ARE LOCATED SYMMETRICALLY WITH RESPECT TO HOLES $H_1$ THROUGH $H_4$, RESPECTIVELY, ON BRACES 31 AND 32. HOLES $G_1$ THROUGH $G_4$ CORRESPOND TO THE INNER DIAMETER DIMENSIONS OF CONDUITS 33 (33') THROUGH 36 (36'), RESPECTIVELY. GASKET MEANS 37 CAN BE MADE OF RUBBER, THERMOPLASTIC, NYLON, CORK, OR THE LIKE AND IN THE PREFERRED EMBODIMENT GASKET MEANS 37 IS MADE OF RUBBER.

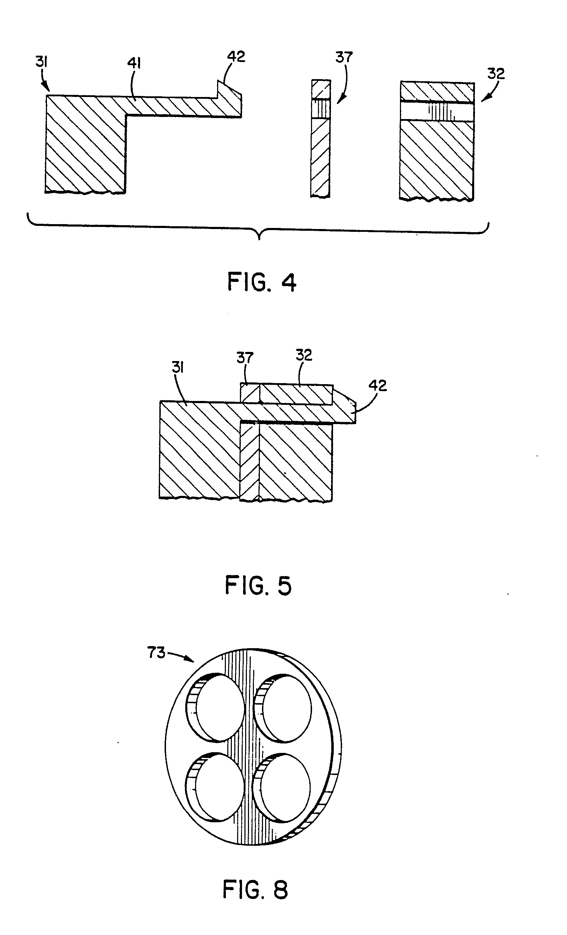

THE SEALING ASSEMBLY IS SECURELY ATTACHED TOGETHER BY SECURING MEANS, SUCH AS BOLT/WINGNUT, RIVETS, SCREWS, GLUEING BRACES 31 AND 32 TO GASKET MEANS 37, OR THE LIKE. IN THE PREFERRED EMBODIMENT, BRACE 31 HAS A MULTIPLICITY OF LATCHING PROJECTIONS (NOT SHOWN IN FIGURE 3) RESIDING NEAR THE PERIPHERY OF ITS CIRCUMFERENCE. THESE PROJECTIONS 41, ILLUSTRATED IN FIGURE 4, ARE AT THE PERIPHERY OF BRACE 31 AND EXTEND A SIAT-ANCE EQUAL TO THE WIDTH OF GASKET MEANS 37 AND BRACE 32, TERMINATING IN HOOK ARRANGEMENT 42. BRACE 32 AND GASKET MEANS 37 ARE LARGER THAN BRACE 31 AND HAVE HOLES CORRESPONDING IN SIZE AND POSITION TO THE PROJECTIONS OF BRACE 31. THE SEALING ASSEMBLY IS SECURED BY PROJECTIONS 41 EXTENDING THROUGH GASKET MEANS 37 AND BRACE 32, ILLUSTRATED IN FIGURE 5, SECURELY LATCHING TO BRACE 32 BY HOOK 42. THE LATCHING PROJECTIONS COULD ALSO LATCH OVER THE SECOND BRACE, WHERE THE SECOND BRACE IS SMALLER THAN THE FIRST BRACE. THIS PROVIDES A TIGHT SEAL WITH MINIMAL LABOR. THE SEALING ASSEMBLY CAN BE DISASSEMBLED BY APPLYIN AN INWARD FORCE ON HOOK 42, AS IS WELL KNOWN IN THE ART. A SEALING COMPOUND, EITHER HARDENING OR NON-HARDENING, MAY ALSO BE USED TO HELP SECURE GASKET MEANS 37 TO BRACES 31 AND 32.

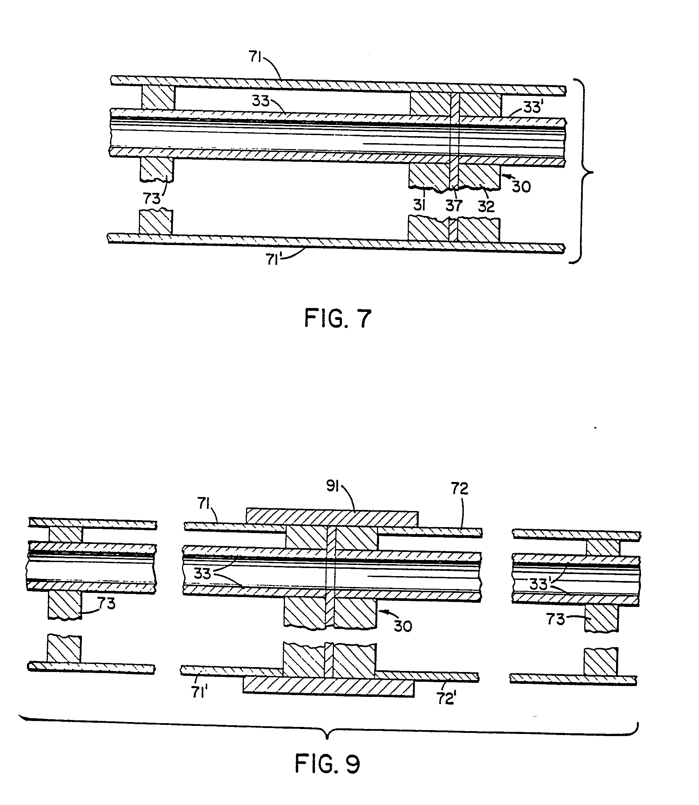

TURNING NOW TO FIGURE 6, ANOTHER EMBODIMENT OF THE SEALING ASSEMBLY OF THE PRESENT INVENTION IS ILLUSTRATED. AS SHOWN IN FIGURE 6, SEALING ASSEMBLY 60 COMPRISES BRACE 61 AND GASKET MEANS 66 TRHOUGH 69. THE GASKET MEANS 66 THROUGH 69 HAVE AN OUTER DIAMETER CORRESPONDING TO THE OUTER DIAMETER OF CONDUITS 33 (33') THROUGH 36 (36'), RESPECTIVELY, AND AN INNER DIAMETER CORRESPONDING TO THE INNER DIAMETER OF CONDUITS 33 (33') THROUGH 36 (36'), RESPECTIVELY. THIS EMBODIMENT ALSO PROVIDES AN AIR-TIGHT, LEAK-RESISTANT SEAL BETWEEN ADJOINING CONDUITS.

IN YET ANOTHER EMBODIMENT OF THE SEALING ASSEMBLY OF THE PRESENT INVENTION, GASKET MEANS 66 THROUGH 69 OF FIGURE 6 HAVE OUTER DIAMETERS SLIGHTLY LARGER THAN CONDUITS 33 (33') THROUGH 36 (36'), RESPECTIVELY. BRACE 61 IS PROVIDED WITH AN INTERNAL RECESS IN EACH HOLE $H_1$ THROUGH $H_4$, AND THE DEPTH OF THE RECESS CORRESPONDS TO THE DIFFERENCE BETWEEN THE GASKET MEANS' OUTER DIAMETER AND THE CONDUITS' OUTER DIAMETER. THE GASKET MEANS WOULD BE A FLEXIBLE MATERIAL, SUCH AS RUBBER, SO THAT THEY COULD BE INSERTED IN THE RECESS THROUGH THE HOLE EASILY A+D WITHOUT DAMAGE.

TURNING NOW TO FIGURE 7, A CUT-AWAY VIEW OF AN EXTERNAL HOUSING ABOUT THE SEALING ASSEMBLY EMBODIMENT OF FIGURE 3 IS SHOWN. (FOR ILLUSTRATION AND CLARITY, ONLY ONE CONDUIT PAIR, 33 AND 33', IS ILLUSTRATED. IT IS TO BE UNDERSTOOD, HOWEVER, THAT THIS ASPECT OF THE PRESENT INVENTION IS NOT LIMITED TO ONLY ONE CONDUIT PAIR). SEALING ASSEMBLY 30 IS SUPPORTED AROUND ITS PERPHERY BY AN EXTERNAL HOUSING, SHOWN IN THIS CUT-AWAY VIEW AS 71 AND 71'. CONDUIT 33 EXTENDS THROUGH SUPPORT BRACE 73, DESCRIBED FURTHER WITH REFERENCE TO FIGURE 8, AND BRACE 31, ABUTTING ONE SIDE OF GASKET MEANS 37 AT ITS TERMINAL WALL. CONDUIT 33' EXTENDS THROUGH BRACE 32, ABUTTING THE OTHER SIDE OF GASKET MEANS 37 AT ITS TERMINAL WALL. AS IS CLEARLY SHOWN, THE INNER DIAMETER OF CONDUITS 33 AND 33' ALIGN WITH THE HOLE IN GASKET MEANS 37. IN THIS WAY, A CONTINUOUS INNER DIAMETER IS PRESENT, WITHOUT ANY DISCONTINUITIES AT THE CONDUITS JOINTURE. SECTIONS OF EXTERNAL HOUSING CAN BE JOINED IN ANY CONVENTIONAL MANNER (NOT SHOWN), WELL KNOWN TO THOSE SKILLED IN THE ART.

TURNING NOW TO FIGURE 8, THE SUPPORT SPACER 73 OF FIGURE 7 IS SHOWN, THE SUPPORT SPACER 73 IS PROVIDED WITH HOLES CORRESPONDING TO THE CONDUIT'S OUTER DIMENSIONS FOR SUPPORTING THE CONDUITS. THE SPACER'S OUTER DIMENSIONS CORRESPOND TO THE EXTERNAL HOUSING'S INNER DIMENSIONS. SUPPORT SPACERS ARE PLACED AT INTERVALS IN THE HOUSING TO HELP SUPPORT THE LOAD WHIC HIS CARRIED BY THE CONDUITS AND TO INSURE THE OCNDUIT'S SYMMETRICAL PLACEMENT WIHTIN THE HOUSING. THE CONDUIT LOAD WILL DETERMINE THE SUPPORT SPACER PLACEMENT, AND IN THE PREFERRED EMBODIMENT, ONE SUPPORT SPACER IS LOCATED MIDWAY BETWEEN ADJACENT SEALING ASSEMBLIES.

TURNING NOW TO FIGURE 9, A CUT-AWAY VIEW OF THE PREFERRED EMBODIMENT OF THE EXTERNAL HOUSING/SEALING ASSEMBLY IS SHOWN, HERE, EXTERNAL HOUSING SECTIONS, 71, 71' AND 72, 72' ARE JOINED BY SLEEVE 91. IN THE PREFERRED EMBODIMENT, SLEEVE 91 FORMS AN AIR-TIGHT, LEAK-RESISTANT SEAL ABOUT EXTERNAL HOUSING SECTIONS 71, 71' AND 72, 72' BY A RIBBED SEAL - (NOT SHOWN), ALTHOUGH OTHER METHODS MAY BE EMPLOYED, AS IS WELL KNOWN TO THOSE SKILLED IN THE ART. THE SEALING ASSEMBLY 30 IS PREFERABLY CENTERED IN SLEEVE 91, AND CAN OPTIONALLY BE AFFIXED TO SLEEVE 91 BY A SEALING COMPOUND. SUPPORT SPACERS 73 SUPPORT CONDUITS 33 AND 33', AND ARE LOCATED A SUITABLE DISTANCE FROM SEALING ASSEMBLY 30, AS DESCRIBED ABOVE.

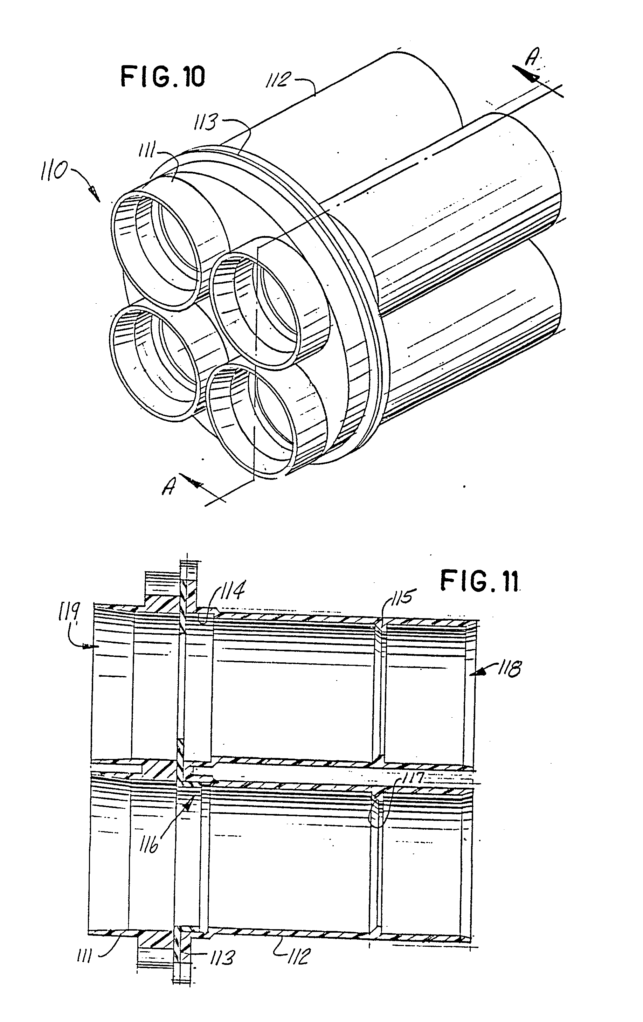

TURNING NOW TO FIGURE 10, AN ISOMETRIC VIEW OF ANOTHER EMBODIMENT OF THE SEALING ASSEBMLY OF THE PRESENT INVENTION IS ILLUSTRATED. SEALING ASSEMBLY 110 INCLUDES BRACES 111 AND 112 ABOUT GASKET 113. IN THE PREFERRED EMBODIMENT, THE BRACES ARE MADE FROM INJECTION-MOLDED PVC PLASTIC, AND THE GASKET IS RUBBER CONFORMING TO ASTM STANDARD F-477. THE BRACES AND GASKET CAN BE JOINED IN ANY CONVENTIONAL MANNER. IN THE PREFERRED EMBODIMENT, PINS (NOT SHOWN) EMANATING FROM BRACE 111 EXTEND THROUGH GASKET 113 AND BRACE 112 WHERE THEY ARE HEATED AND PRESSED DOWN TO THE SURFACE OF BRACE 112, FORMING A FLANGE WHICH SECURELY ATTACHES THE BRACES TO THE GASKET.

TURNING NOW TO FIGURE 11, A CUT-AWAY VIEW FROM LINES A-A OF ASSEMBLY 110 OF FIGURE 10 IS SHOWN, AND INCLUDES RACEWAYS 114 AND STOP-RINGS 115. THE CONDUITS TO BE JOINED ENTER THE ASSEMBLY TROUGH OPENINGS 119 AND 118 OF BRACE 111 AND BRACE 112, RESPECTIVELY. THE BRACES ARE PREFERABLY BEVELED AT THESE OPENINGS TO FACILITATE CONDUIT ENTRY. ADDITIONALLY, THE CONDUITS WHICH ENTER AT BRACE 11 ARE ALSO PREFERABLY BEVELED TO MINIMIZE DAMAGE TO THE GASKET AS IT SLIDES THROUGH BRACE 111, PAST GASKET 113, AND INTO BRACE 112 WHERE IT STOPS AT STOP-RINGS 115. AS SHOWN AT 116, THE CONDUITS WHICH ENTER AT BRACE 111 CAUSE THE OVERHANGING PORTIONS OF GASKET 113 TO LIE IN RACEWAYS 114. THE GASKET PRESSURE ON THE CONDUITS AT 116 CREATES AN AIR-TIGHT AND LEAK-RESISTANT SEAL ABOUT ITS PERIPHERY. THE CONDUIT'S BEVEL IS PREFERABLY SYMMETRIC WITH RESPECT TO THE STOP-RING'S BEVEL AT 117. ONCE THE CONDUITS HAVE BEEN INSERTED INTO THE SEALING ASSEMBLY, THEY ARE PREFERABLY SOLVENT-WELDED AT OPENINGS 118 AND 119 TO INCREASE SEALING INTEGRITY AND ENSURE PERMANENT PLACEMENT OF THE CONDUITS IN THE SEALING ASSEMBLY. ADDITIONALLY, AN OPTIONAL EXTERNAL HOUSING CAN BE EMPLOYED TO FURTHER PROTECT THE CONDUITS AND SEALING ASSEMBLY.

IN ALL SEALING ASSEMBLY EMBODIMENTS DISCUSSED ABOVE, FOUR PAIR OF CONDUITS ARE ILLUSTRATED. HOWEVER, ANY OTHER NUMBER OF CONDUITS COULD BE SO JOINED, THE RELEVANT PARAMETERS BEING THE OUTER DIMENSION OF THE BRACES AND THE CONDUIT'S OUTER DIAMETERS. THE CONDUITS' PLACEMENT ABOUT THE BRACES IS A DESIGN-CHOICE, ALTHOUGH ONE PLACEMENT MAY BE PREFERRED OVER ANOTHER DUE TO GEOMETRICAL ADVANTAGES SUCH AS HEXAGONAL CLOSE-PACK, FOR EXAMPLE. ADDITIONALLY, THIS INVENTION IS NOT LIMITED TO PLASTIC OR PVC CONDUITS, AND ANY OTHER CONVENTIONAL CONDUIT MATERIAL, SUCH AS METAL, GLASS, OR GLASS-LINED, WOULD ALSO WORK. A CHANGE IN THE CONDUIT TYPE MAY ALSO PRECIPITATE A NEED TO CHANGE GASKET TYPE SO THAT THE TWO MATERIALS ARE COMPATIBLE. FURTHERMORE, SEALING ASSEMBLY AND SUPPORT SPACER DIMENSIONS ARE DETERMINED ACCORDING TO CONDUIT MATERIAL TYPE AND SIZE, AS WELL AS LOAD SUPPORTING CHARACTERISTICS.

IT IS FURTHER TO BE UNDERSTOOD THAT, ALTHOUGH ILLUSTRATIVE EMBODIMENTS OF THE PRESENT INVENTION HAVE BEEN DESCRIBED IN DETAIL WITH REFERENCE TO THE ACCOMPANYING DRAWINGS, THE PRESENT INVENTION IS NOT LIMITED TO THOSE PRECISE EMBODIMENT. VARIOUS CHANGES OR MODIFICATIONS MAY BE EFFECTED THEREIN BY ONE SKILLED IN THE ART WITHOUT DEPARTING FROM THE SCOPE OR SPIRIT OF THE INVENTION.

**Claims**

1. A DEVICE FOR COUPLING AND PROVIDING AN AIR-TIGHT AND LEAK-RESISTANT SEAL BETWEEN ADJOINING MULTIPLE PAIRS OF CONDUITS, EACH CONDUIT HAVING AN INNER AND AN OUTER DIMENSION, SAID DEVICE COMPRISING:

A FIRST BRACE HAVING A MULITPLICITY OF HOLES CORRESPONDING TO THE OUTER DIMENSIONS OF THE CONDUITS FOR SUPPORTING HALF OF THE MULTIPLE PAIR OF CONDUITS;

A SECOND BRACE HAVING THE MULTIPLICITY OF HOLES CORRESPONDING TO THE OUTER DIMENSIONS OF THE CONDUITS FOR SUPPORTING THE MULTIPLE PAIRS OF CONDUITS;

A GASKET MEANS HAVING A MULTIPLICITY OF HOLES AT LEAST SMALLER THAN THE OUTER DIMENSIONS OF THE CONDUITS FOR CONTACTING A PORTION OF THE OUTER SURFACES OF THE HALF OF THE MULTIPLE PAIRS OF CONDUITS AND THEREBY PROVIDING AN AIR-TIGHT AND LEAK-RESISTANT SEAL THEREBETWEEN; AND

MEANS FOR SECURING SAID FIRST AND SAID SECOND BRACE TO SAID GASKET MEANS.

2. THE DEVICE OF CLAIM 1 WHEREIN SAID SEDOND BRACE FURTHER COMPRISES:

A MULTIPLICITLY OF RACEWAYS CORRESPONDING TO SAID GASKET'S THICKNESS FOR HOUSING A PORTION OF SAID GASKET MEANS UPON INSERTION OF A CONDUIT FROM SAID FIRST BRACE TO SAID SECOND BRACE.

3. THE DEVICE OF CLAIM 2 WHEREIN SAID SECOND BRACE FURTHER COMPRISES:

A MULTIPLICITY OF STOP-RINGS FOR TERMINATING THE INSERTION OF CONDUITS FROM SAID FIRST BRACE AND FROM SAID SECOND BRACE.

4. THE DEVICE OF CLAIM 3 WHEREIN EACH OF SAID STOP-RINGS INCLUDES A BEVELED EDGE FACING SAID FIRST BRACE.

5. THE DEVICE OF CLAIM 1 WHEREIN SAID MEANS FOR SECURING INCLUDES PINS EMANATING FROM SAID FIRST BRACE, THROUGH SAID GASKET MEANS AND SAID SECOND BRACE, WHEREIN THE PORTION OF SAID PINS WHICH PROJECT THROUGH SAID SECOND BRACE ARE COMPRESSABLE FOR SECURELY ATTACHING SAID BRACES TO SAID GASKET MEANS.

6. THE DEVICE OF CLAIM 1 WHEREIN SAID FIRST BRACE FURTHER COMPRISES BEVELS FOR FACILIATING THE INSERTION OF CONDUITS.

7. THE DEVICE OF CLAIM 1 WHEREIN SAID SECOND BRACE FURTHER COMPRISES BEVELS FOR FACILITATING THE INSERTION OF CONDUITS.

8. THE DEVICE OF CLAIM 1 WHEREIN THE CONDUITS ARE SECURELY FASTENED TO SAID DEVICE BY SOLVENT-WELDING THE CONDUITS TO SAID DEVICE.

9. THE DEVICE OF CLAIM 1 WHEREIN SAID MEANS FOR SECURING IS A BOLT EXTENDING THROUGH SAID FIRST BRACE SAID GASKET MEANS AND SAID SECOND BRACE, TERMINATING WITH A NUT AT SAID SECOND BRACE.

10. THE DEVICE OF CLAIM 1 WHEREIN:

SAID MEANS FOR SECURING COMPRISES A LATCHING MEANS FOR LATCHING SAID FIRST BRACE TO SAID SECOND BRACE.

11. THE DEVICE OF CLAIM 10 WHEREIN SAID LATCHING MEANS COMPRISES:

A MULTIPLICITY OF LATCHING PROJECTIONS ON SAID FIRST BRACE, EACH PROJECTION HAVING A HOOKED END;

A MULTIPLICITY OF LATCHING HOLES ON SAID SECOND BRACE CORRESPONDING IN POSITION TO SAID MULITPLICITY OF LATCHING PROJECTIONS ON SAID FIRST BRACE; AND

WHEREIN SAID FIRST AND SAID SECOND BRACE ARE SECURED TO SAID GASKET MEANS BY LATCHING SAID HOOKED END INTO THE MULTIPLICITY OF LATCHING HOLES ON SAID SECOND BRACE.

12. THE DEVICE OF CLAIM 11 WHEREIN SAID MULITPLICITY OF PROJECTIONS RESIDE ON THE PERIPHERY OF SAID FIRST BRACE.

13. THE DEVICE OF CLAIM 12 WHEREIN SAID SECOND BRACE IS LARGER THAN SAID FIRST BRACE.

14. A DEVICE FOR COUPLING AND PROVIDING AN AIR-TIGHT AND LEAK-RESISTANT SEAL BETWEEN ADJOINING MULTIPLE PAIRS OF CONDUITS, EACH CONDUIT HAVING AN INNERAND AN OUTER DIMENSION, SAID DEVICE COMPRISING:

A BRACE HAVING A MULTIPLICITY OF HOLES CORRESPONDING TO THE OUTER DIMENSIONS OF THE OCNDUITS FOR SUPPORTING THE MULTIPLE PAIRS OF CONDUITS IN A CONNECTING FASHION, AND

A MULTIPLICITY OF GASKET MEANS, EACH OF SAID GASKET MEANS HAVING AN INNER DIMENSION CORRESPONDING TO THE INNER DIMENSION OF THE CONDUIT PAIR BEING JOINED, FOR PROVIDING A SEAL BETWEEN THE TERMINAL WALLS OF THE ADJOINING PAIR CONDUITS.

15. THE DEVICE OF CLAIM 14 WHEREIN:

SAID BRACE FURTHER COMPRISES A RECESSED PORTION IN EACH OF THE MULTIPLICITY OF HOLES, AND

EACH OF SAID GASKET MEANS HAS AN OUTER DIMENSION CORRESPONDING TO THE DIMENSION OF THE RECESS FOR FIXEDLY POSITIONING SAID GASKET MEANS IN SAID RECESS.

16. A DEVICE FOR CONTAINING MULTIPLE PAIRS OF CONDUITS, EACH CONDUIT HAVING AN INNER AND AN OUTER DIMENSION, SAID DEVICE COMPRISING:

AN INTERNAL COUPLER FOR COUPLING AND PROVIDING AN AIR-TIGHT AND LEAK-RESISTANT SEAL BETWEEN ADJOINING PAIRS OF MULTIPLE CONDUITS, SAID INTERNAL COUPLER INCLUDING:

A FIRST BRACE HAVING A MULTIPLICITY OF HOLES CORRESPONDING TO THE OUTER DIMENSIONS OF THE CONDUITS FOR SUPPORTING HALF OF THE MULTIPLE PAIR OF CONDUITS;

A SECOND BRACE HAVING THE MULTIPLICITY OF HOLES CORRESPONDING TO THE OUTER DIMENSIONS OF THE CONDUITS FOR SUPPORTING THE OTHER HALF OF THE MULTIPLE PAIR OF CONDUITS;

A GASKET MEANS HAVING A MULTIPLICITY OF HOLES CORRESPONDING TO THE INNER DIMENSIONS OF THE CONDUITS FOR PROVIDING A SEAL BETWEEN THE TERMINAL ENDS OF ADJOINING PAIRS OF CONDUITS;

MEANS FOR SECURING SAID FIRST AND SAID SECOND BRACE TO SAID GASKET MEANS; AND

AN EXTERNAL HOUSING FOR CONTAINING AT LEAST A PORTION OF THE MULTIPLE PAIRS OF CONDUITS.

17. THE DEVICE OF CLAIMS 16 FURTHER COMPRISING:

A SLEEVE MEANS FOR CONTAINING SAID INTERNAL COUPLER AND FOR JOINING MULTIPLE SECTIONS OF SAID EXTERNAL HOUSING.

18. THE DEVICE OF CLAIM 16 FURTHER COMPRISING A SUPPORT SPACER HAVING A MULITPLICITY OF HOLES CORRESPONDING TO THE OUTER DIMENSIONS OF THE CONDUITS FOR SUPPORTING HALF OF THE MULTIPLE PAIRS OF CONDUITS AT A PREDETERMINED LOCATION IN SAID EXTERNAL HOUSING.

19. THE DEVICE OF CLAIM 16 WHEREIN SAID MEANS FOR SECURING IS A BOLT EXTENDING THROUGH SAID FIRST BRACE, SAID GASKET MEANS, AND SAID SECOND BRACE, TERMINATING WITH A NUT AT SAID SECOND BRACE.

20. THE DEVICE OF CLAIM 16 WHEREIN:

SAID MEANS FOR SECURING COMPRISES A LATCHING MEANS FOR LATCHING SAID FIRST BRACE TO SAID SECOND BRACE.

21. THE DEVICE OF CLAIM 20 WHEREIN SAID LATCHING MEANS COMPRISES:

A MULTIPLICITY OF LATCHING PROJECTIONS ON SAID FIRST BRACE, EACH PROJECTION HAVING A HOOKED END;

A MULTIPLICITY OF LATCHING HOLES ON SAID SECOND BRACE CORRESPONDING IN POSITION TO SAID MULTIPLICITY OF LATCHING PROJECTIONS ON SAID FIRST BRACE; AND

WHEREIN SAID FIRST AND SAID SECOND BRACE ARE SECURED TO SAID GASKET MEANS BY LATCHING SAID HOOKED END INTO THE MULTIPLICITY OF LATCHING HOLES ON SAID SECOND BRACE.

22. THE DEVICE OF CLAIM 21 WHEREIN SAID MULTIPLICITY OF PROJECTIONS RESIDE ON THE PERIPHERY OF SAID FIRST BRACE.

23. THE DEVICE OF CLAIM 22 WHEREIN SAID SECOND BRACE IS LARGER THAN SAID FIRST BRACE.

24. A DEVICE FOR CONTAINING MULTIPLE PAIRS OF CONDUITS, EACH CONDUIT HAVING AN INNER AND AN OUTER DIMENSION, SAID DEVICE COMPRISING:

AN INTERNAL COUPLER FOR COUPLING AND PROVIDING AN AIR-TIGHT AND LEAK-RESISTANT SEAL BETWEEN ADJOINING PAIRS OF MULTIPLE CONDUITS,

SAID INTERNAL COUPLER INCLUDING:

A BRACE HAVING A MULTIPLICTIY OF HOLES CORRESPONDING TO THE OUTER DIMENSIONS OF THE CONDUIT FOR SUPPORTING THE MULTIPLE PAIRS OF CONDUITS IN A CONNECTING FASHION;

A MULTIPLICITY OF GASKET MEANS, EACH OF SAID GASKET MEANS HAVING AN INNER DIMENSION CORRESPONDING TO THE INNER DIMENSION OF THE CONDUIT PAIR BEING JOINED, FOR PROVIDING A SEAL BETWEEN THE TERMINAL WALLS OF THE ADJOINING PAIR OF CONDUITS; AND

AN EXTERNAL HOUSING FOR CONTAINING AT LEAST A PORTION OF THE MULTIPLE PAIRS OF CONDUITS.

25. THE DEVICE OF CLAIM 24 FURTHER COMPRISING A SUPPORT SPACER HAVING THE MULTIPLICITY OF HOLES CORRESPONDING TO THE OUTER DIMENSIONS OF THE CONDUITS FOR SUPPORTING HALF OF THE MULTIPLE PAIRS OF CONDUITS AT A SELECTED LOCATION IN THE EXTERNAL HOUSING.

26. THE DEVICE OF CLAIM 24 WHEREIN:

SAID BRACE FURTHER COMPRISES A RECESSED PORTION IN EACH OF THE MULTIPLICITY OF HOLES; AND

EACH OF SAID GASKET MEANS HAS AN OUTER DIMENSION CORRESPONDING TO THE DIMENSION OF THE RECESS FOR FIXEDLY POSITIONING SAID GASKET MEANS IN SAID RECESS.

27. THE DEVICE OF CLAIM 24 FURTHER COMPRISING:

A SLEEVE MEANS FOR CONTAINING SAID INTERNAL COUPLER AND FOR JOINING MULTIPLE SECTIONS OF SAID EXTERNAL HOUSING.

FIG. I

FIG. 2

FIG. 3

FIG. 6

FIG. 4

FIG. 5

FIG. 8

FIG. 7

FIG. 9

# FIG.10

110

111

112

113

A

A

# FIG. 11

119

114

115

118

116

117

111

113

112